# EUROPÄISCHE PATENTSCHRIFT

(11) **EP 3 759 370 B1**
(45) Veröffentlichungstag und Bekanntmachung des Hinweises auf die Patenterteilung: **05.04.2023**
(21) Anmeldenummer: 19706361.3
(22) Anmeldetag: 01.02.2019
(51) Int. Cl.: F16D 25/08

(54) **NEHMERZYLINDER MIT GEBERTEIL-ANBINDUNG IM KOLBEN; BETÄTIGUNGSEINRICHTUNG SOWIE KUPPLUNGSSYSTEM**
SLAVE CYLINDER HAVING ENCODER PART CONNECTION IN THE PISTON; ACTUATING DEVICE AND CLUTCH SYSTEM
CYLINDRE RÉCEPTEUR À LIAISON DE PARTIES ÉMETTRICES DANS LE PISTON ; ÉQUIPEMENT D'ACTIONNEMENT ET SYSTÈME D'EMBRAYAGE

(30) Priorität: 01.03.2018 DE 102018104676
(43) Veröffentlichungstag der Anmeldung: 06.01.2021
(73) Patentinhaber: Schaeffler Technologies AG & Co. KG, 91074 Herzogenaurach (DE)
(72) Erfinder: REUTTER, Doris Maria, 77883 Ottenhöfen (DE); WAGNER, Philippe, 67460 Souffelweyersheim (FR)
(86) Internationale Anmeldenummer: PCT/DE2019/100104
(87) Internationale Veröffentlichungsnummer: WO 2019/166045

(56) Entgegenhaltungen:
- WO-A1-2017/178011
- DE-A1-102008 061 071
- DE-A1-102009 032 831
- DE-A1-102009 056 380
- DE-C1- 10 034 530

## Beschreibung

Die Erfindung betrifft einen Nehmerzylinder für eine Kupplungsbetätigungseinrichtung eines Kraftfahrzeuges, wie eins Pkws, Lkws, Busses oder sonstigen Nutzfahrzeuges, mit einem Gehäuse, einem in dem Gehäuse verschiebbar aufgenommenen sowie mit dem Gehäuse einen fluidischen Druckraum begrenzenden Kolben, wobei der Kolben eine den Druckraum zu einer Umgebung hin abdichtende Dichtung aufweist, und mit einer zur Erfassung einer Position des Kolbens entlang seines Verschiebeweges (relativ zu dem Gehäuse) ausgebildeten Sensoreinrichtung, wobei ein Geberteil der Sensoreinrichtung (unmittelbar / direkt) verschiebefest an dem Kolben aufgenommen ist. Des Weiteren betrifft die Erfindung eine Betätigungseinrichtung für eine Kupplung eines Kraftfahrzeuges, mit diesem Nehmerzylinder sowie ein Kupplungssystem für einen Antriebsstrang mit dieser Betätigungseinrichtung.

Gattungsgemäßer Stand der Technik ist bereits hinlänglich bekannt. Durch die EP 1 898 111 A2 ist beispielsweise ein Zentralausrücker für eine hydraulische Kupplungsbetätigung offenbart, wobei zur Erfassung der Axialposition eines Ringkolbens ein an einem Gehäuse befestigter Sensor sowie ein dem Sensor zugeordneter, verschiebbar geführter Magnetkörper vorhanden sind.

Aus dem Stand der Technik hat es sich jedoch in manchen Fällen als Nachteil herausgestellt, dass bspw. eine unbeabsichtigte Verdrehung des Geberteils relativ zu dem Gehäuse zu einer unzureichenden Lagedetektion des Kolbens führt. Fehlmessungen sind die Folge. Wird das Geberteil größer dimensioniert, um einer unbeabsichtigten Verlagerung des Geberteils im Betrieb entgegen zu wirken, wird jedoch mehr Bauraum benötigt, was die Größe des Nehmerzylinders ansteigen lässt. Zudem haben drehgesicherte Anordnungen des Geberteils häufig den Nachteil, dass es aufgrund der verdrehgesicherten Führung des Kolbens zu einem stärkeren Verschleiß der Dichtung des Kolbens kommt.

Aus der DE 100 34 530 C1 ist ein Nehmerzylinder nach dem Oberbegriff des Anspruchs 1 offenbart. Weiterer Stand der Technik zeigen beispielsweise die WO 2017/178011 A1, die DE 10 2009 056 380 A1, die DE 2009 032 831 A1 sowie die DE 10 2008 061 071 A1.

Es ist daher die Aufgabe der vorliegenden Erfindung, die aus dem Stand der Technik bekannten Nachteile zu beheben und insbesondere einen Nehmerzylinder mit einer möglichst kompakten sowie langlebigen Sensoreinrichtung zur Verfügung zu stellen. Dies wird erfindungsgemäß dadurch gelöst, dass das Geberteil in einer in dem Gehäuse ausgebildeten Führungsbahn entlang des Verschiebewegs des Kolbens relativ zu dem Gehäuse geführt ist.

Durch diese Führung des Geberteils relativ zu dem Gehäuse ist eine Erfassung des Geberteils deutlich erleichtert. Das Geberteil sowie der Nehmerzylinder können dadurch besonders kompakt ausgeführt werden.

Das Geberteil ist in axialer Richtung (d.h. entlang der Längsachse) fest / verschiebefest an dem Grundabschnitt des Kolbens aufgenommen. Dadurch wird die Anbringung des Geberteils besonders einfach gehalten.

Da das Geberteil in einer in Umfangsrichtung umlaufenden Aufnahmerinne des Grundabschnittes frei bewegbar (in Umfangsrichtung) geführt ist, ist die Verdrehbarkeit des Geberteils relativ zu dem Grundabschnitt konstruktiv besonders einfach umgesetzt.

Weitere vorteilhafte Ausführungsformen sind mit den Unteransprüchen beansprucht und nachfolgend näher erläutert.

Demnach ist es auch von Vorteil, wenn die Führungsbahn gerade / linear (sowie weiter bevorzugt ausschließlich in axialer Richtung einer Längsachse des Kolbens) verläuft. Dadurch ist die Führung des Geberteils besonders einfach herstellbar.

Hinsichtlich der Aufnahme des Geberteils ist es weiterhin vorteilhaft, wenn das Geberteil derart an dem Kolben (vorzugsweise einem Grundabschnitt des Kolbens) aufgenommen ist, dass der Kolben relativ zu dem Geberteil um seine Längsachse (frei) verdrehbar ist. Dadurch wird es dem Geberteil ermöglicht, sich relativ zu dem Kolben, vorzugsweise einem Grundabschnitt des Kolbens, zu bewegen. Die Dichtung des Kolbens ist als Folge deutlich geringeren Belastungen ausgesetzt.

In diesem Zusammenhang ist es auch zweckmäßig, wenn die Dichtung drehfest an einem das Geberteil aufnehmenden Grundabschnitt des Kolbens angebracht ist.

Des Weiteren ist es von Vorteil, wenn die Führungsbahn durch eine in dem Gehäuse vorgesehene Vertiefung / Rinne / Rille, wie eine Nut, ausgebildet ist. Dadurch ist auch die Führungsbahn besonders einfach herstellbar.

Der Aufbau des Gehäuses ist weiterhin vereinfacht, indem die Führungsbahn an einer radialen Innenseite eines den Kolben in radialer Richtung von außen umgebenden Wandungsbereiches des Gehäuses ausgebildet / ausgeformt ist.

Die Montage wird weiterhin vereinfacht, wenn das Geberteil mittels einer formschlüssigen Verbindung in axialer Richtung relativ zu dem Kolben festgelegt / vormontiert ist. Die Aufnahme des Geberteils wird zusätzlich erleichtert, wenn das Geberteil einen Magneten sowie einen diesen Magneten aufnehmenden Halter aufweist. Der Halter ist bevorzugt direkt an dem Kolben aufgenommen. Der Halter ist weiter bevorzugt bei Vorsehen der formschlüssigen Verbindung zur Umsetzung der formschlüssigen Verbindung ausgebildet. Der Halter ist bevorzugt um den Magneten, unter der Aufnahme des Magneten, herum gespritzt.

Des Weiteren betrifft die Erfindung eine Betätigungseinrichtung für eine Kupplung eines Kraftfahrzeuges, mit einem erfindungsgemäßen Nehmerzylinder nach zumindest einer der zuvor beschriebenen Ausführungen sowie einem fluidisch mit dem Nehmerzylinder gekoppelten Aktor (vorzugsweise hydraulischer Aktor oder alternativ Geberzylinder).

Auch betrifft die Erfindung ein Kupplungssystem für einen Antriebsstrang eines Kraftfahrzeugs, mit einer Kupplung sowie einer diese Kupplung betätigenden Betätigungseinrichtung.

In anderen Worten ausgedrückt, ist somit erfindungsgemäß eine Magnetanbindung (Anbindung des Geberteils) im Kolben unter Umsetzung einer frei rotierenden Dichtung realisiert. Der Magnet wird (vorzugsweise zusammen mit einem Magnethalter) über einen Formschluss mit dem Kolben verbunden. Der Magnet wird im Gehäuse axial über eine Nut im Gehäuse geführt und ist somit fixiert. Die Dichtung kann frei rotieren und somit wird der Verschleiß an der Dichtung reduziert.

Die Erfindung wird nun nachfolgend anhand von Figuren näher erläutert.

Es zeigen:
- Fig. 1: eine Längsschnittdarstellung eines erfindungsgemäßen Nehmerzylinders nach einem bevorzugten Ausführungsbeispiel, wobei ein in einer ausgefahrenen Stellung angeordneter Kolben sowie eine die Verschiebeposition des Kolbens erfassende Sensoreinrichtung erkennbar sind,
- Fig. 2: eine Längsschnittdarstellung des Nehmerzylinders nach Fig. 1, wobei der Kolben in einer eingefahrenen Stellung angeordnet ist,
- Fig. 3: eine perspektivische Darstellung des in Längsrichtung geschnittenen Nehmerzylinders nach Fig. 1, wobei der Kolben in seiner ausgefahrenen Stellung angeordnet ist,
- Fig. 4: eine perspektivische Darstellung eines in Längsrichtung geschnittenen Teilzusammenbaus des Nehmerzylinders, wobei der Kolben noch nicht vollständig in ein Gehäuse des Nehmerzylinders eingeschoben ist und ein Geberteil der Sensoreinrichtung noch nicht an dem Kolben aufgenommen ist,
- Fig. 5: eine perspektivische Teildarstellung einer radialen Innenseite eines Wandungsbereiches des Gehäuses, wobei eine das Geberteil in axialer Richtung führende Führungsbahn erkennbar ist,
- Fig. 6: eine detaillierte Seitenansicht des Zusammenbaus aus Kolben und Geberteil, wobei eine umlaufende sowie das Geberteil verschiebbar in Umfangsrichtung aufnehmende Aufnahmerinne des Kolbens dargestellt ist, und
- Fig. 7: eine detaillierte Explosionsdarstellung des in Fig. 6 gezeigten Zusammenbaus in perspektivischer Ansicht.

Die Figuren sind lediglich schematischer Natur und dienen ausschließlich dem Verständnis der Erfindung. Die gleichen Elemente sind mit denselben Bezugszeichen versehen.

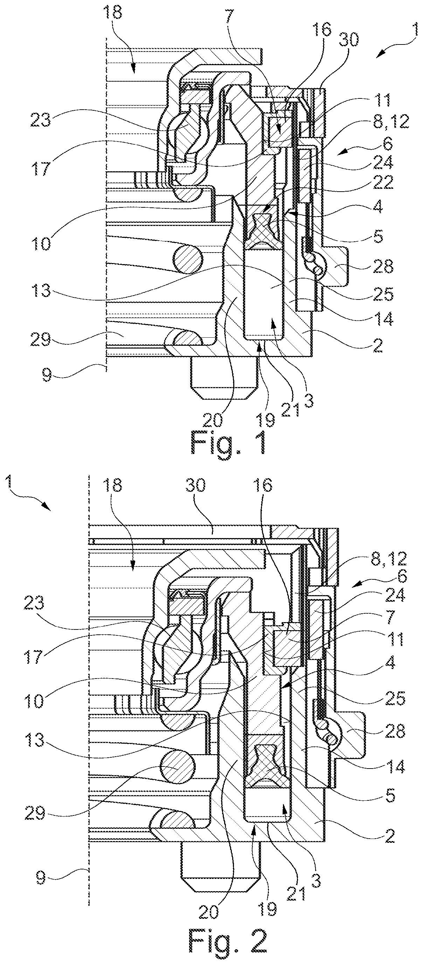

In Fig. 1 ist der prinzipielle Aufbau eines erfindungsgemäßen Nehmerzylinders 1 veranschaulicht. Der Nehmerzylinder 1 ist im Betrieb Teil einer Betätigungseinrichtung einer Kupplung, nämlich einer Reibungskupplung, eines Kraftfahrzeugantriebsstranges. Der Nehmerzylinder 1 ist als ein fluidischer, hier hydraulischer, Nehmerzylinder 1 ausgebildet. Der Nehmerzylinder 1 steht auf übliche Weise mit einem Geberzylinder der Betätigungseinrichtung in Wirkzusammenhang und betätigt je nach Stellsignal des Geberzylinders die Kupplung zwischen ihrer eingerückten und ausgerückten Stellung im Betrieb des Antriebsstranges. Der Nehmerzylinder 1 ist als ein konzentrischer Nehmerzylinder 1 ausgeführt, der gesamtheitlich im Wesentlichen ringförmig aufgebaut ist. Ein den Nehmerzylinder 1 zentral, d.h. entlang seiner Längsachse 9, durchdringendes Durchgangsloch 18 dient im Betrieb zum Durchführen einer Welle, vorzugsweise einer Getriebeeingangswelle eines Getriebes des Antriebsstranges.

Der Nehmerzylinder 1 weist gemäß seiner Ausbildung als konzentrischer Nehmerzylinder 1 ein ringförmiges Gehäuse 2 auf. Das Gehäuse 2 bildet ebenfalls einen ringförmigen Aufnahmeraum 19, der zu einer axialen Seite hin geöffnet ist aus. In dem Aufnahmeraum 19 ist ein Kolben 4 verschiebbar in axialer Richtung / entlang der Längsachse 9 aufgenommen. Der Kolben 4 schließt mit dem Gehäuse 2 / dem Aufnahmeraum 19 einen Druckraum 3 ein, der im Betrieb fluidisch mit dem Geberzylinder gekoppelt ist.

Der Aufnahmeraum 19 wird zu einer radialen Außenseite durch einen ersten Wandungsbereich 14 und zu einer radialen Innenseite durch einen zweiten Wandungsbereich 20 gebildet / begrenzt. Zu einer axialen Seite hin ist der Aufnahmeraum 19 durch einen Bodenbereich 21, der die beiden Wandungsbereiche 20 und 14 in radialer Richtung verbindet, begrenzt. Der Aufnahmeraum 19 ist zu einer dem Bodenbereich 21 entgegengesetzten axialen Seite hin mit einer Öffnung 22 versehen / geöffnet. Durch diese Öffnung 22 ragt der Kolben 4 aus dem Aufnahmeraum 19 axial hinaus.

Eine Dichtung 5 ist zur Abdichtung des Druckraums 3 in axialer Richtung an dem Kolben 4 vorgesehen. Die Dichtung 5 ist als Dichtring ausgebildet. Die Dichtung 5 ist, wie in Zusammenwirkung der Fign. 1 und 2 zu erkennen, über den gesamten im Betrieb umgesetzten Verschiebeweg des Kolbens 4 (zwischen seiner eingefahrenen Stellung (Fig. 2) und seiner ausgefahrenen Stellung (Fig. 1)) in dem Aufnahmeraum 19 / Gehäuse 2, nämlich radial zwischen den beiden Wandungsbereichen 14 und 20 aufgenommen / geführt. Der Kolben 4 ist axial mittels einer Vorlastfeder 29 (Schraubendruckfeder) zu seiner ausgefahrenen Stellung hin relativ zu dem Gehäuse 2 vorgespannt. Ein Endanschlag 30 sichert ein Herausfallen des Kolbens 4 aus dem Gehäuse 2.

Die Dichtung 5 ist in dieser Ausführung an einem sich im Wesentlichen hülsenförmig erstreckenden Grundabschnitt 10 des Kolbens 4 drehfest aufgenommen. Die Dichtung 5 ist an einer ersten axialen Stirnseite des Grundabschnittes 10 angebracht. Zu einer, der ersten Stirnseite abgewandten, zweiten Stirnseite hin ist der Grundabschnitt 10 auf typische Weise mit einem Betätigungslager 23 verschiebefest gekoppelt. Das Betätigungslager 23 ist in Form eines Schrägkugellagers realisiert.

Zur Erfassung der Verschiebeposition des Kolbens 4 relativ zu dem Gehäuse 2 ist zusätzlich eine Sensoreinrichtung 6 (auch als Lagedetektionseinrichtung bezeichnet) in dem Nehmerzylinder 1 vorhanden. Die Sensoreinrichtung 6 weist einen Sensor 24 auf, der in dem Gehäuse 2 aufgenommen ist. Der Sensor 24 ist radial außerhalb des ersten Wandungsbereiches 14 angeordnet. Der Sensor 24, bspw. in Form eines HallSensors, ist ausgestaltet, ein verschiebefest mit dem Kolben 4 verbundenes Geberteil 7 (auch als Target oder sensierbares / detektierbares Teil bezeichnet) über den gesamten Verschiebeweg des Kolbens 4 hinweg zu erfassen, um somit im Betrieb einen Rückschluss auf die aktuelle Position des Kolbens 4 zu erhalten. Der Sensor 24 ist radial von außen von einem an dem Gehäuse 2 angebrachten Deckel 28 abgedeckt.

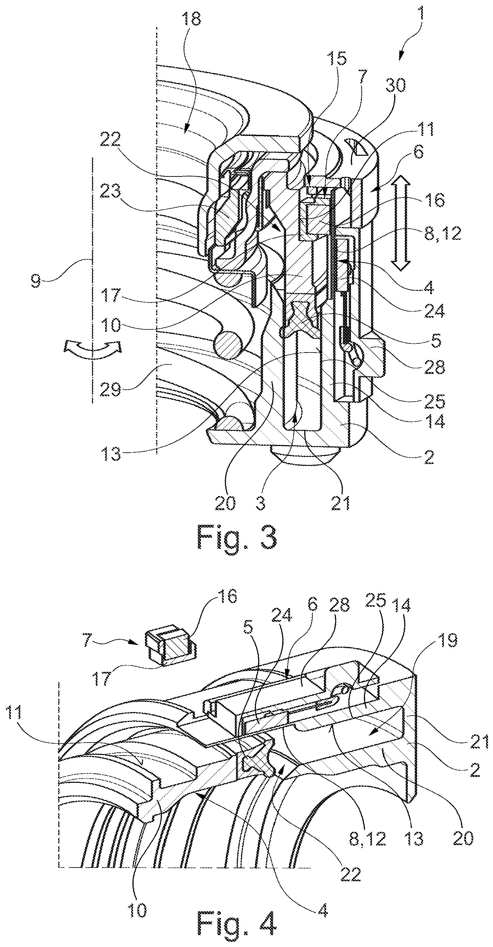

Das Geberteil 7 weist zumindest einen Magneten 16 auf. In dieser Ausführung, wie auch in Verbindung mit den Fign. 3, 4, 6 und 7 zu erkennen, ist das Geberteil 7 zusätzlich mit einem den Magneten 16 aufnehmenden Halter 17 (Magnethalter) versehen. Der Halter 17 ist bevorzugt aus einem Kunststoff hergestellt. Der Halter 17 nimmt den Magneten 16 formschlüssig auf. Bevorzugt wird ein den Halter 17 ausbildendes Material in seinem Urformvorgang um den Magneten 16 herumgespritzt (Spritzgießverfahren). Nach dem Aushärten des Materials des Halters 17 bildet dieser Halter 17 eine Umspritzung des Magneten 16. Der Magnet 16 ist bevorzugt als ein Permanentmagnet realisiert.

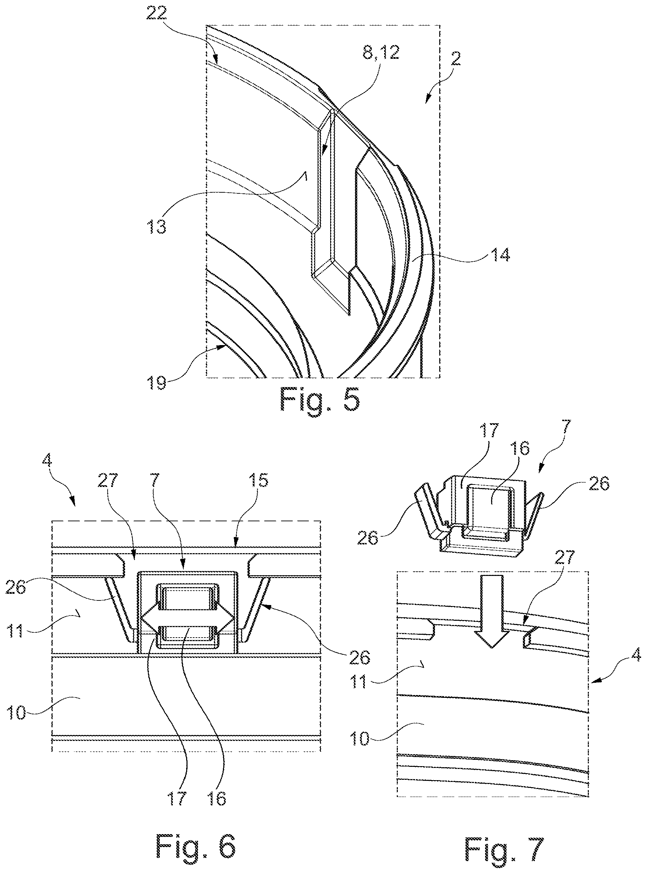

Zurückkommend auf die Fign. 1 und 2 ist weiterhin zu erkennen, dass das Geberteil 7 erfindungsgemäß entlang der Verschieberichtung des Kolbens 4, d.h. in einer axialen Richtung / entlang der Längsachse 9 verschiebbar in dem Gehäuse 2 geführt ist. Hierzu weist das Gehäuse 2 an einer radialen Innenseite 13 des ersten Wandungsbereiches 14 eine Führungsbahn 8 auf, die sich entlang der Längsachse 9 erstreckt. Die Führungsbahn 8 ist in Form einer in axialer Richtung verlaufenden Vertiefung 12 (auch als Rille / Rinne bezeichnet) umgesetzt. Die Vertiefung 12 ist in radialer Richtung nach innen geöffnet, wie in Fig. 5 zu erkennen. Die Vertiefung 12 ist bspw. als Längsnut ausgeführt. Auch ist die Vertiefung 12 zu einer dem Bodenbereich 21 axial abgewandten Seite des Gehäuses 2 hin geöffnet. Das Geberteil 7 ist in der Führungsbahn 8 in Umfangsrichtung im Wesentlichen spielfrei abgestützt. Dadurch ist das Geberteil 7 relativ zu dem Gehäuse 2 drehfest angeordnet, jedoch in axialer Richtung relativverschiebbar.

In Verbindung mit den Fign. 1 und 2 sowie Fig. 5 ist des Weiteren zu erkennen, dass die Führungsbahn 8 in axialer Richtung benachbart zu einem Laufbereich 25 der Dichtung 5 angeordnet ist. Der Laufbereich 25 stellt jenen axialen Bereich dar, in dem die Dichtung 5 entlang des Verschiebewegs des Kolbens 4 im Betrieb hin und her verschiebbar ist. Um die Dichtwirkung der Dichtung 5 zu gewährleisten, schließt die Führungsbahn 8 bevorzugt vollständig in axialer Richtung beabstandet zu dem Laufbereich 25 an.

In Fig. 6 ist weiterhin gezeigt, dass das Geberteil 7 in axialer Richtung verschiebefest mit dem Grundabschnitt 10 verbunden ist. Zusätzlich ist das Geberteil 7 in Umfangsrichtung / tangentialer Richtung des Kolbens 4 (in Bezug auf die Längsachse 9) frei bewegbar relativ zu dem Grundabschnitt 10 angeordnet / aufgenommen. Hierzu ist an einer radialen Außenseite des Grundabschnittes 10 eine ringförmige, d.h. vollständig umlaufende Aufnahmerinne 11 gebildet. Die Aufnahmerinne 11 bildet für das Geberteil 7 eine Führungsschiene. Das Geberteil 7 ist in dieser Aufnahmerinne 11 frei bewegbar angeordnet. Dadurch ist eine freie Verdrehung des Grundabschnittes 10 / des Kolbens 4 gegenüber dem Geberteil 7 im Betrieb ermöglicht, wie in Fig. 6 mit einem ersten Doppelpfeil und in Fig. 3 mit einem um die Längsachse 9 herum gekrümmten zweite Doppelpfeil zu erkennen.

In dieser Ausführung ist der Halter 17 zudem vorzugsweise über eine formschlüssige Verbindung 15 (Schnappverbindung) in axialer Richtung in der Aufnahmerinne 11 befestigt, wie in den Fign. 6 und 7 zu erkennen. In diesem Zusammenhang sei darauf hingewiesen, dass gemäß weiteren Ausführungen prinzipiell auch auf den Halter 17 und/oder die formschlüssige Verbindung 15 verzichtet ist. In Zusammenhang mit Fig. 4 sei darauf hingewiesen, dass die Aufnahmerinne 11 in einer weiteren Ausführung in Umfangsrichtung durchgängig von zwei axialen Seitenflanken gebildet ist, wobei das Geberteil 7 vor einem axialen Einschieben des Kolbens 4 in das Gehäuse 2 radial von außen in die Aufnahmerinne 11 eingesetzt wird.

Die formschlüssige Verbindung 15 wird nach den Fign. 6 und 7 durch zwei sich in Umfangsrichtung entgegen gerichtete Schnappnasen 26 des Halters 17 in Verbindung mit einem Durchführungsloch 27 realisiert. Das die Aufnahmerinne 11 zu einer axialen Seite (vorzugsweise zu der der Dichtung 5 abgewandten axialen Seite) hin öffnende Durchführungsloch 27 ist mit seiner Breite (Erstreckung in Umfangsrichtung) derart auf eine Breite des Halters 17 abgestimmt, dass das Geberteil 7 in seinem in der Aufnahmerinne 11 axial eingeschobenen Stellung mit den Haltenasen 17 axial formschlüssig abgestützt ist. Durch die Bewegbarkeit des Geberteils 7 in Umfangsrichtung relativ zu dem Grundabschnitt 10, ist auch die Dichtung 5 in Umfangsrichtung relativ zu dem Geberteil 7 frei bewegbar.

In einer weiteren Ausführung, die hier der Übersichtlichkeit halber nicht dargestellt ist, ist der Nehmerzylinder 1 als ein Doppel-Nehmerzylinder 1 ausgebildet. Der Nehmerzylinder 1 ist weiterhin als Doppel-CSC / doppelter konzentrischer Nehmerzylinder 1 umgesetzt. Ein erster ringförmiger Druckraum (mit einem ersten ringförmigen Kolben) ist radial außerhalb eines zweiten ringförmigen Druckraums (mit einem zweiten ringförmigen Kolben) angeordnet. Die Anordnung / Ausbildung des inneren (zweiten) Druckraums ist entlang einer in axialer Richtung verlaufenden Bezugslinie spiegelverkehrt zu der des ersten Druckraums.

In anderen Worten ausgedrückt, ist oberhalb des Druckraums 3 eine Führungslaufbahn 8 für den Magneten 7, 16 angelegt. Die Geometrie lässt nur eine axiale Bewegung des Magneten 7, 16 zu. Im Kolben 4 wird tangential eine Nut (Aufnahmerinne 11) angebracht, so dass der Kolben 4 weiterhin frei rotieren kann (vermindert Dichtungsverschleiß). In axialer Richtung nimmt der Kolben 4 den Magneten 7, 16 mit. Die Fign. 1 und 2 zeigen die Anordnung (Nehmerzylinder 1) in ausgerückter und nicht ausgerückter / eingerückter Lage. Generell gibt es zwei Alternativen den Magneten 6, 17 zu montieren. Fig. 4 zeigt die radiale Montage des Magneten 6, 17. Solange der Kolben 4 noch nicht vollständig ins Gehäuse 2 eingetaucht ist, wird der Magnet 6, 17 auf Höhe der Führung (Führungsbahn 8) im Gehäuse 2 eingesetzt. Sobald der Kolben 4 im Gehäuse 2 montiert ist, verhindert der Formschluss 15, dass der Magnet 6, 17 aus der Führungsbahn 8 im Gehäuse 2 entweichen kann. Fign. 6 und 7 zeigen, dass der Magnet 6, 17 vorzugsweise auch mit Hilfe einer Schnappverbindung 15 axial gehalten werden kann. Diese ist so ausgeführt, dass der Kolben 4 weiterhin in Rotationsrichtung frei ist. Fign. 3 und 5 zeigen die Rotationsmöglichkeit des Kolbens 4 und den axialen Freiheitsgrad des Magneten 6, 17. Zudem ist die lokale Führung 8 im Gehäuse 2 zu sehen. Theoretisch ist auch ein Einsatz in einem Doppel-CSC / doppelten konzentrischen Nehmerzylinder möglich. Dann ist die Anordnung für den (radial) inneren Druckraum spiegelverkehrt.

### Bezugszeichenliste

- 1: Nehmerzylinder
- 2: Gehäuse
- 3: Druckraum
- 4: Kolben
- 5: Dichtung
- 6: Sensoreinrichtung
- 7: Geberteil
- 8: Führungsbahn
- 9: Längsachse
- 10: Grundabschnitt
- 11: Aufnahmerinne
- 12: Vertiefung
- 13: Innenseite
- 14: erster Wandungsbereich
- 15: formschlüssige Verbindung
- 16: Magnet
- 17: Halter
- 18: Durchgangsloch
- 19: Aufnahmeraum
- 20: zweiter Wandungsbereich
- 21: Bodenbereich
- 22: Öffnung
- 23: Betätigungslager
- 24: Sensor
- 25: Laufbereich
- 26: Schnappnase
- 27: Durchführungsloch
- 28: Deckel
- 29: Vorlastfeder
- 30: Endanschlag

## Patentansprüche

1. Nehmerzylinder (1) für eine Kupplungsbetätigungseinrichtung eines Kraftfahrzeuges, mit einem Gehäuse (2), einem in dem Gehäuse (2) verschiebbar aufgenommenen sowie mit dem Gehäuse (2) einen fluidischen Druckraum (3) begrenzenden Kolben (4), wobei der Kolben (4) eine den Druckraum (3) zu einer Umgebung hin abdichtende Dichtung (5) aufweist, und mit einer zur Erfassung einer Position des Kolbens (4) entlang seines Verschiebeweges ausgebildeten Sensoreinrichtung (6), wobei ein Geberteil (7) der Sensoreinrichtung (6) verschiebefest an dem Kolben (4) aufgenommen ist, **wobei** das Geberteil (7) in einer in dem Gehäuse (2) ausgebildeten Führungsbahn (8) entlang des Verschiebeweges des Kolbens (4) relativ zu dem Gehäuse (2) geführt ist, **dadurch gekennzeichnet, dass** das Geberteil (7) an einem Grundabschnitt (10) des Kolbens (4) entlang einer Längsachse (9) verschiebefest aufgenommen ist und dass das Geberteil (7) in einer in Umfangsrichtung umlaufenden Aufnahmerinne (11) des Grundabschnittes (10) frei bewegbar geführt ist.

2. Nehmerzylinder (1) nach Anspruch 1, **dadurch gekennzeichnet, dass** das Geberteil (7) derart an dem Kolben (4) aufgenommen ist, dass der Kolben (4) relativ zu dem Geberteil (7) um seine Längsachse (9) verdrehbar ist.

3. Nehmerzylinder (1) nach einem der Ansprüche 1 bis 2, **dadurch gekennzeichnet, dass** die Führungsbahn (8) durch eine in dem Gehäuse (2) vorgesehene Vertiefung (12) ausgebildet ist.

4. Nehmerzylinder (1) nach einem der Ansprüche 1 bis 3, **dadurch gekennzeichnet, dass** die Führungsbahn (8) an einer radialen Innenseite (13) eines den Kolben (4) in radialer Richtung von außen umgebenden Wandungsbereiches (14) des Gehäuses (2) ausgebildet ist.

5. Nehmerzylinder (1) nach einem der Ansprüche 1 bis 4, **dadurch gekennzeichnet, dass** das Geberteil (7) mittels einer formschlüssigen Verbindung (15) in axialer Richtung relativ zu dem Kolben (4) festgelegt ist.

6. Nehmerzylinder (1) nach einem der Ansprüche 1 bis 5, **dadurch gekennzeichnet, dass** das Geberteil (7) einen Magneten (16) sowie einen diesen Magneten (16) aufnehmenden Halter (17) aufweist.

7. Betätigungseinrichtung für eine Kupplung eines Kraftfahrzeuges, mit einem Nehmerzylinder (1) nach zumindest einem der Ansprüche 1 bis 6 sowie einem fluidisch mit dem Nehmerzylinder (1) wirkverbundenen Aktor.

8. Kupplungssystem für einen Antriebsstrang eines Kraftfahrzeuges, mit einer Kupplung sowie einer Betätigungseinrichtung nach Anspruch 7.

## Claims

1. A slave cylinder (1) for a clutch actuating device of a motor vehicle, having a housing (2), a piston (4), which is movably received in the housing (2) and, together with the housing (2), delimits a fluidic pressure chamber (3), wherein the piston (4) has a seal (5), which seals the pressure chamber (3) from an environment, and having a sensor device (6), designed to detect a position of the piston (4) along the displacement path thereof, wherein an encoder part (7) of the sensor device (6) is received on the piston (4) in a stationary manner, **wherein** the encoder part (7) is guided in a guide track (8), formed in the housing (2), along the displacement path of the piston (4) relative to the housing (2), **characterized in that** the encoder part (7) is received on a base section (10) of the piston (4) such that it is fixed along a longitudinal axis (9) and that the encoder part (7) is guided in a freely movable manner in a receiving groove (11) of the base section (10) running in the circumferential direction.

2. The slave cylinder (1) according to Claim 1, **characterized in that** the encoder part (7) is received on the piston (4) in such a way that the piston (4) is rotatable about its longitudinal axis (9) relative to the encoder part (7).

3. The slave cylinder (1) according to either of Claims 1 to 2, **characterized in that** the guide track (8) is formed by a recess (12) provided in the housing (2).

4. The slave cylinder (1) according to any one of Claims 1 to 3, **characterized in that** the guide track (8) is formed on a radial inner side (13) of a wall region (14) of the housing (2) surrounding the piston (4) in a radial direction from the outside.

5. The slave cylinder (1) according to any one of Claims 1 to 4, **characterized in that** the encoder part (7) is positionally fixed in the axial direction relative to the piston (4) by means of a positive connection (15).

6. The slave cylinder (1) according to any one of Claims 1 to 5, **characterized in that** the encoder part (7) comprises a magnet (16) as well as a holder (17) that receives said magnet (16).

7. An actuating device for a clutch of a motor vehicle, having a slave cylinder (1) according to at least one of Claims 1 to 6 and an actuator which is operatively fluidically connected to the slave cylinder (1).

8. A clutch system for a drive train of a motor vehicle, having a coupling and an actuating device according to Claim 7.

## Revendications

1. Cylindre récepteur (1) pour un dispositif d'actionnement d'embrayage d'un véhicule automobile, comprenant un carter (2), un piston (4) réceptionné de manière à pouvoir être déplacé dans le carter (2) et délimitant avec le carter (2) une chambre de pression fluidique (3), dans lequel le piston (4) présente un joint (5) scellant de manière hermétique la chambre de pression (3) par rapport à un environnement et comprenant un dispositif capteur (6) conçu pour la détection d'une position du piston (4) le long de sa trajectoire de déplacement, dans lequel une partie émettrice (7) du dispositif capteur (6) est réceptionnée de manière solidaire en déplacement au niveau du piston (4), **dans lequel** la partie émettrice (7) est guidée dans un rail de guidage (8) formé dans le carter (2) le long de la trajectoire de déplacement du piston (4) par rapport au carter (2), **caractérisé en ce que** la partie émettrice (7) est réceptionnée de manière solidaire en déplacement au niveau d'une section de base (10) du piston (4) le long d'un axe longitudinal (9) et **en ce que** la partie émettrice (7) est guidée librement mobile dans une rigole de réception (11) de la section de base (10) allant dans le sens périphérique.

2. Cylindre récepteur (1) selon la revendication 1, **caractérisé en ce que** la partie émettrice (7) est réceptionnée au niveau du piston (4) de sorte que le piston (4) puisse tourner, par rapport à la partie émettrice (7), autour de son axe longitudinal (9).

3. Cylindre récepteur (1) selon l'une quelconque des revendications 1 à 2, **caractérisé en ce que** le rail de guidage (8) est formé par une encoche (12) prévue dans le carter (2).

4. Cylindre récepteur (1) selon l'une quelconque des revendications 1 à 3, **caractérisé en ce que** le rail de guidage (8) est formé au niveau d'une face interne radiale (13) d'une zone de paroi (14) du carter (2) entourant le piston (4) dans la direction radiale depuis l'extérieur.

5. Cylindre récepteur (1) selon l'une quelconque des revendications 1 à 4, **caractérisé en ce que** la partie émettrice (7) est fixée au moyen d'un assemblage par complémentarité de forme (15) dans la direction axiale par rapport au piston (4).

6. Cylindre récepteur (1) selon l'une quelconque des revendications 1 à 5, **caractérisé en ce que** la partie émettrice (7) présente un aimant (16) ainsi qu'un support (17) réceptionnant ledit aimant (16).

7. Équipement d'actionnement pour un embrayage d'un véhicule automobile, comprenant un cylindre récepteur (1) selon au moins une des revendications 1 à 6 ainsi qu'un actionneur en liaison fonctionnelle fluidique avec le cylindre récepteur (1).

8. Système d'embrayage pour une chaîne cinématique d'un véhicule automobile comprenant un embrayage et un dispositif d'actionnement selon la revendication 7.
